(19) Europäisches Patentamt / European Patent Office / Office européen des brevets

(11) **EP 3 019 285 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(21) Anmeldenummer: **14744457.4**

(22) Anmeldetag: **03.07.2014**

(51) Int Cl.:
**B08B 9/055** (2006.01)  **F16L 55/26** (2006.01)
**G01M 3/00** (2006.01)  **B60L 7/28** (2006.01)

(86) Internationale Anmeldenummer:
**PCT/EP2014/001830**

(87) Internationale Veröffentlichungsnummer:
**WO 2015/003783 (15.01.2015 Gazette 2015/02)**

(54) **MOLCH ZUR REINIGUNG UND/ODER INSPEKTION VON ROHREN**

PIG FOR CLEANING AND/OR INSPECTION OF PIPES

PISTON RACLEUR POUR LE NETTOYAGE ET/OU INSPECTION DE TUYAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2013 DE 102013011626**

(43) Veröffentlichungstag der Anmeldung:
**18.05.2016 Patentblatt 2016/20**

(73) Patentinhaber: **Rosen Swiss AG**
**6370 Stans (CH)**

(72) Erfinder:
• **DANILOV, Andrey**
**49809 Lingen (DE)**
• **BEUKER, Thomas**
**48149 Münster (DE)**

(74) Vertreter: **Busse & Busse**
**Patent- und Rechtsanwälte Partnerschaft**
**Grosshandelsring 6**
**49084 Osnabrück (DE)**

(56) Entgegenhaltungen:
EP-B1- 1 828 764      WO-A1-03/078887
DE-A1- 19 618 903     US-A- 3 495 626
US-A1- 2007 022 830

**Beschreibung**

Die vorliegende Erfindung betrifft einen Molch zum Durchfahren eines langgestreckten Rohres, vorzugsweise einer Gaspipeline, wobei der Molch zumindest eine Funktionseinheit zum Reinigen des Rohres und/oder zum Aufnehmen von Rohrinformationen sowie eine Mehrzahl von Magneten aufweist. Rohrinformationen können z.B. Informationen über die Position von Rissen, Korrosionsstellen, Rohr(wand)deformationen oder -durchmessern sein.

Aus dem Stand der Technik gemäß EP 1 828 764 B1 ist ein Molch bekannt, welcher zur Identifikation von Defekten in der Rohrwand eine Funktionseinheit zum Aufnehmen von Rohrinformationen aufweist. Hierzu weist der Molch eine Mehrzahl von Magneten auf, die die Rohrwand in einem von den Sensoren abtastbaren Bereich magnetisieren. Nachteilig ist bei den passiv bewegten Molchen, dass sie in Abhängigkeit des Antriebsmediums und der im Rohr entstehenden Reibung unterschiedlich schnell unterwegs sein können. Im Rohr erhöht sich z.B. an Querschnittsverjüngungen des Rohres die Reibung, so dass sich dessen Geschwindigkeit verringert. Als Folge baut sich insbesondere bei Gas-Pipelines Druck hinter dem Molch auf, der diesen dann in dem Moment der Überwindung des Reibungswiderstands stark beschleunigt. Dies führt zu einer schlechteren Datenqualität der Messung bis hin zu einem Fehlschlagen der Messung für den Bereich, in dem der Molch oberhalb einer kritischen Geschwindigkeit von beispielsweise 5 m/s unterwegs ist.

Ein Molch nach dem Oberbegriff des Anspruchs 1 ist aus der WO 03/078887 A1 bekannt, bei dem ein Modul von mehreren Modulen des Molchs ein gegen die Wand der Pipeline mithilfe von Federgliedern angedrücktes Rad zur rollenden Anlage umfasst. Dieses Rad kann durch eine Dreheinrichtung angetrieben oder auch alternativ durch hydraulische, mechanische, magnetische oder elektrische Mittel zur Steuerung der Geschwindigkeit des Tractor Moduls gebremst werden.

Es ist Aufgabe der vorliegenden Erfindung, die Geschwindigkeit eines Molches, der in Rohren, vorzugsweise Gaspipelines, eingesetzt wird, besser kontrollieren zu können.

Die Aufgabe wird gelöst durch einen Gegenstand gemäß Anspruch 1. Vorteilhafte Ausgestaltungen der Erfindung sind den hierauf rückbezogenen Unteransprüchen sowie der nachfolgenden Beschreibung zu entnehmen.

Erfindungsgemäß ist vorgesehen, dass der Molch eine durch die Magneten zumindest mit ausgebildete Wirbelstrombremseinheit aufweist. Diese Wirbelstrombremseinheit, die als Teil eines bisherigen Molches oder als zusätzlich an einen bisherigen Molch ankoppelbare Bremseinheit ausgebildet sein kann, stellt dem Molch eine verschleißfreie Bremse zur Verfügung, die gezielt die Wechselwirkung von in einer Wand des Rohres aufgrund von Wirbelströmen erzeugten Magnetfeldern mit den Magneten des Molchs zur Erzeugung einer Bremskraft und zur Geschwindigkeitskontrolle ausnutzt.

Durch Wechselwirkung der Magnete mit in der Wand des Rohres aufgrund von Wirbelstrom bzw. von Wirbelströmen induzierten Magnetfeldern wird eine geschwindigkeitsabhängige Bremskraft erzeugt, durch die verhindert wird, dass der Molch eine für eine Reinigung oder Aufnahme von Messdaten nicht akzeptable Geschwindigkeit erreicht. Für die vorbeschriebene Situation mit einem beispielsweise aufgrund einer Schweißnaht erhöhten Reibungswiderstand ergibt sich bei Überwindung des Reibungswiderstands mit einem erfindungsgemäßen Molch eine weniger starke Beschleunigung, da die von der Wirbelstrombremseinheit ausgehende Bremskraft mit steigender Geschwindigkeit zunimmt. Umgekehrt fällt die Bremskraft bis auf "0" ab, wenn sich die Geschwindigkeit auf "0" reduziert.

Die Wirbelstrombremseinheit wird durch die Magnete zumindest in dem Sinn mit ausgebildet, dass sie in der Regel noch weitere Teile aufweist wie z.B. Haltemittel, über die die Magneten in einer bestimmten Position gehalten werden oder über die die Wirbelstrombremseinheit mit weiteren Molchsegmenten verbunden ist.

Im Vergleich zu aus dem Stand der Technik bekannten Magneten, die zur Vormagnetisierung der Wand des Rohres bzw. der Rohrwand und zur Aufnahme von Rohrinformationen eingesetzt werden, sind die von einer Wirbelstrombremseinheit erzeugten Kräfte mindestens um den Faktor 5, vorzugsweise um den Faktor 10 größer. Nur so kann eine hinreichende Wirkung mit dem Ziel, die Geschwindigkeit des Molches innerhalb gewünschter Bereiche oder zumindest vermehrt innerhalb gewünschter Bereiche zu halten, erzielt werden.

Insbesondere sind die Magnete der Wirbelstrombremseinheit dergestalt ausgelegt, dass die von der Wirbelstrombremseinheit erzeugten Wirbelstrombremskräfte größer sind als die Reibungskraftzuwächse, die typischerweise in einer Rohrleitung beispielsweise aufgrund von Schweißnähten, Beulen od.dgl. auftreten oder zu erwarten sind. Zwar ist für das Anfahren des Molches und das Erreichen der Strömungsgeschwindigkeit des Rohrmediums ein größerer Druck hinter dem erfindungsgemäßen Molch notwendig. Fährt der Molch allerdings auf ein Hindernis, beispielsweise eine Schweißnaht in der Rohrleitung, und reduziert sich hierdurch die Geschwindigkeit, verringert sich die von der Wirbelstrombremseinheit ausgehende Bremskraft, was der Geschwindigkeitsreduzierung entgegenwirkt. Der Molch bewegt sich somit gleichförmiger, was für Reinigungs- oder Datenaufnahmevorgänge vorteilhaft ist. Im Ideal- und gewünschten Betriebsfall, wenn die Bremskräfte der Wirbelstrombremseinheit bei Messgeschwindigkeit größer sind als die von etwaigen Rohrhindernissen ausgeübten Reibungs- bzw. Bremskraftzuwächse, kann durch die geschwindigkeitsabhängige Bremskraft der Molch ohne Stehenzubleiben Hindernisse überfahren und somit zu hohe Geschwindigkeiten aufgrund eines sich hinter dem Molch beim Stehenbleiben aufbauenden Gasdrucks vermeiden.

Nach dem Überfahren des Hindernisses wird etwaig zusätzlich aufgebauter Druck und die hiermit einhergehende Geschwindigkeitserhöhung über die Steigerung der Bremskraft aufgrund der Wirbelstrombremseinheit so aufgefangen, dass die Maximalgeschwindigkeit nicht oder nur kurz einen für Messung oder Reinigung gegebenen Grenzwert überschreitet.

Während im Stand der Technik die verwendeten Magnete oftmals dazu verwendet werden, weite Bereiche der Rohrwand in den magnetischen Sättigungsbereich zu . bringen, ist es das Ziel bei der Konstruktion der Wirbelstrombremseinheit, möglichst gesättigte Bereiche zu vermeiden und ein Maximum an (magnetischer) Flussdichte senkrecht zur Rohrinnenoberfläche über einen möglichst weiten Bereich zu erhalten. Der Aufbau von Wirbelströmen mit dem gewünschten Effekt erfolgt insbesondere durch einen senkrecht zur innenseitigen Oberfläche des Rohres und in dessen Wand verlaufenden Magnetfluß. Hierfür sind die Magnete in Längsrichtung des Molches, d.h., in eine Richtung, die einer Längsrichtung der Rohrleitung entspricht mit hintereinander alternierenden Polaritäten angeordnet, um so den Bereich mit einem senkrecht zur innenseitigen Rohroberfläche verlaufenden Magnetfluss zu vergrößern und den Sättigungseinfluss zu mindern.

Insbesondere sind die Magnete dergestalt angeordnet, dass die Ausrichtung von Süd- nach Nordpol parallel zur Längsrichtung des Molches verläuft. Effektive Wirbelstrombremseinheiten sind in Längsrichtung des Molches vorzugsweise mit zumindest drei hintereinander angeordneten Magneten mit entgegengesetzten Ausrichtungen, d.h., alternierende Polaritäten, versehen. Verbessert handelt es sich um zumindest vier, fünf oder sechs hintereinander angeordnete Magnete. Die Anzahl der Magnete ist in Abhängigkeit von der gewünschten Bremskraft und der Bogengängigkeit des Molches auszulegen.

Während die Magnete auch senkrecht zur Längsachse des Molches ausgerichtet sein können, um direkt ein in die Rohrwand hineingerichtetes, senkrecht zu dieser gerichtetes Magnetfeld zu erzeugen, sind insbesondere in Längsrichtung und somit parallel zur Längsmittelachse des Molches ausgerichtete Magneten zumindest mit einem magnetisch permeablen Verbindungselement ausgestattet, welches vorzugsweise zwei Magnete miteinander verbindet. Ein solches Verbindungselement dient dem gezielten Bündeln und/oder Einleiten von Feldlinien in die Rohrleitungswand und ist mit einer Längsachse, die in Richtung seiner längsten Erstreckung verläuft, insbesondere senkrecht zur Rohrleitungswand ausgerichtet und vorzugsweise dicht an dieser zu positionieren. Das Verbindungselement kann ein- oder mehrstückig beispielsweise aus einer Anzahl von aneinander anliegenden Stäben oder Platten ausgebildet sein.

Besonders vorteilhaft ist eine Ausbildung mit insgesamt zumindest 4 magnetischen Verbindungselementen, die jeweils einen Magneten zwischen sich haben, so dass die Konstruktion zumindest drei in Fahrtrichtung hintereinander angeordnete magnetische Kreise, d.h. geschlossene Pfade des magnetischen Flusses ausbilden. Die geschlossenen Pfade verlaufen durch die Verbindungselemente, die Permanent- oder Elektromagnete, die Rohrwand und etwaige Spalte zwischen den einzelnen Elementen.

Durch eine erfindungsgemäße Wirbelstrombremseinheit werden vorzugsweise in der Rohrwand in Umfangsrichtung um den Molch herumlaufende Wirbelströme erzeugt, mit deren Hilfe verbessert Bremskräfte, nämlich Wirbelstrombremskräfte, zu erzielen sind. Die möglichen Bremskräfte sind noch größer, wenn die Magnete dergestalt alternierend nacheinander angeordnet und insbesondere auch mit permeablen Verbindungsstücken verbunden sind, dass eine Mehrzahl von abwechselnd in entgegengesetzte Richtung fließenden Wirbelströmen erzeugt wird.

Um möglichst hohe alternierende Flussdichten in der Rohrwand und hier senkrecht zur Rohrinnenoberfläche zu erzeugen und gleichzeitig die Wirbelstrombremseinheit unter dem Aspekt Bogengängigkeit im Rohr zu optimieren, ist die Erstreckung der Magnete von Polende zu Polende kleiner als die Erstreckung der Magnete quer dazu. Die Magnete sind somit flach. Dies vorzugsweise in Richtung längs der Molchlängsachse. Mit ebenfalls flach, d.h. in Richtung der Längsmittelachse kurz ausgebildeten, magnetisch permeablen Verbindungselementen können entsprechend hohe in entgegengesetzte Richtungen weisende Flüsse im Rohr erzeugt werden. In Richtung senkrecht zur Rohrinnenoberfläche und damit auch senkrecht zur Längsachse des Molches kann die Erstreckung der Verbindungselemente hierbei dann vorzugsweise größer sein als in Richtung quer dazu.

Die Kombination eines Magneten mit zumindest einem magnetisch permeablen Verbindungselement bzw. auch mit zwei magnetisch permeablen Verbindungselementen auf jeweils einer Seite führt zur Ausbildung eines Magnetjoches, d.h., einer Kombination eines magnetisch permeablen Materials mit einem Permanent- oder Elektromagneten. Dasselbe Verbindungselement kann gleichzeitig Teil zweier benachbarter Magnetjoche sein. Entsprechend kann die Abfolge der Magneten mit den Verbindungselementen zusammen auch als Abfolge von insbesondere fünf miteinander verbundenen Magnetjochen bezeichnet werden.

Die einzelnen Magnetjoche können in Längsrichtung unmittelbar hintereinander angeordnet werden. Um die Bogengängigkeit und Anpassungsfähigkeit an Fehlstellen im Rohr zu verbessern, können die einzelnen Joche in Längsrichtung betrachtet auch flexibel aneinander oder relativ beweglich zueinander angeordnet sein.

Das magnetisch permeable Verbindungselement ist insbesondere platten- oder stabförmig bzw. aus einer Mehrzahl von Stäben ausgebildet.

Zur einfacheren Konstruktion des Tools sind mehrere Magnete auf einer Trägereinheit angeordnet. Dies insbesondere in Längsrichtung hintereinander. Die Ausbildung von Wirbelstromfeldern im Rohr ist darüber hinaus verbessert, wenn in Umfangsrichtung des Molches mehrere Trägereinheiten nebeneinander angeordnet sind. So ist es zwar denkbar, dass eine Wirbelstrombremseinheit bezüglich einer Längsmittelachse des Molches lediglich auf einer Seite der Achse Magnete aufweist. Zur Ausbildung von in Umfangsrichtung vollständig umlaufenden Wirbelströmen ist es jedoch vorteilhafter, wenn z.B. auch auf der gegenüberliegenden Seite Magnete angeordnet sind, die dann in Umfangsrichtung neben den weiteren Magneten liegen.

Vorzugsweise sind eine Mehrzahl von in Umfangsrichtung nebeneinander liegenden Trägereinheiten vorhanden, insbesondere mehr als drei, so dass im Rahmen des zur Verfügung stehenden Bauraums die Wirbelstrombremseinheit in Umfangsrichtung umlaufend mit Magneten versehen ist und entsprechend eine optimale Ausbildung von in Umfangsrichtung um den Molch herumlaufenden Wirbelströme erzielt wird. Insbesondere sind die Trägereinheiten rotationssymmetrisch in Umfangsrichtung mit möglichst kleinen Spalten nebeneinander angeordnet.

Vorzugsweise weist der Molch wenigstens einen Abstandshalter auf, über den die Magneten von der Wand beabstandet positionierbar sind. Bei einer Mehrzahl von Trägereinheiten kann der Abstandshalter zentral für alle Trägereinheiten zuständig sein. Insbesondere ist jedoch jeder Trägereinheit zumindest ein Abstandshalter zugeordnet. Noch vorteilhafter weist jede Trägereinheit in Längsrichtung an ihrem Anfang und ihrem Ende zumindest jeweils einen Abstandshalter auf. Der Abstandshalter ist an dem Magnetträger angebracht oder kann Teil desselben sein.

Bei Verwendung von die mechanische Reibung an der Rohrinnenseite verringernden Abstandshaltern wie z.B. Kufen oder Rädern kann die Wirbelstrombremseinheit gezielter und unabhängiger von mechanischen Reibungskräften ausgelegt werden. Entsprechendes gilt auch für die Trägereinheiten.

Ein erfindungsgemäßer Molch mit einer Wirbelstrombremseinheit ist insbesondere dann verbessert an jeweilige Rohrleitungssituationen anpassbar, wenn der Abstandshalter dergestalt variabel ist, dass projiziert auf eine Ebene senkrecht zur Längsachse des Molches der Abstandshalter relativ zu den Magneten positionierbar ist. Hierdurch ist der Abstand der Magneten von der Rohrwand einstellbar. Je nach Maximalgeschwindigkeit, die im Rohr anfällt, ist die von der Wirbelstrombremseinheit ausgeübte Bremskraft anpassbar.

Für die Wirbelstrombremskraft gilt

$$F_{Brake} = \int_V (\sigma v \times B) \times B \, dV ,$$

wobei $\sigma$ die elektrische Leitfähigkeit des Rohres, v die Geschwindigkeit des Molches und B die magnetische Flußdichte in dem magnetisierten Rohr ist. Die Wirbelstromdichte j = $\sigma$v x B.

Vorzugsweise ist die Wirbelstrombremseinheit als eine eigene Baugruppe des Molches insbesondere über ein Gelenk mit der Funktionseinheit verbunden. Sie kann jedoch auch teilweise mit Sensoren zur Aufnahme von Daten des Rohres bestückt sein und somit eine kombinierte Wirbelstrombrems- und Funktionseinheit darstellen.

Soweit $F_{Brake}$ (v1) für einen Rohrdurchmesser $D_1$ bei einer ungestörten Fortbewegung ohne Querschnittsverjüngung und mit einer Molchgeschwindigkeit v1 bekannt ist, hat sich aus einer Vielzahl umfangreicher Simulationen gezeigt, dass sich die Bremskraft für Setups mit identischen Trägereinheiten für verschiedene Rohrdurchmesser $D_{Pipe}$ vorzugsweise wie folgt bestimmen lässt.

$$F_{Brake}(D_{Pipe}, v1) = F_{Brake}(v1)^* D_{Pipe} / D_1$$

Vorzugsweise ergibt sich bei einer Geschwindigkeit v1 des Molches von 2 m/s für die Bremskraft $F_{Brake}$ eine untere Abschätzung gemäß folgender Näherung:

$$F_{Brake} = m^* D_{Pipe},$$

wobei $D_{Pipe}$ = Durchmesser des Rohres in Metern, m = 7.000 N/m

Dies ergibt insbesondere für Rohre bis zu einem Durchmesser von 0,80 m eine vorteilhafte Ausbildung, für größere Durchmesser liegt die untere Abschätzung eher höher, da die Bremskräfte auch größer sein und aufgrund von größeren Bögen längere Trägereinheiten verwendet werden können.

Die Abstandshalter können vorzugsweise als an der Trägereinheit angeordnete Rollen, über die sich die Trägereinheit reibungsmindernd an einer Rohrwand abstützen kann, ausgebildet sein. Es kann sich hier jedoch auch um Kufen, Cups oder andere Abstandshalter handeln.

Die Trägereinheiten sind vorzugsweise in Richtung quer zur Längsachse des Molches beweglich gelagert, um Unebenheiten und Bögen besser zu über- bzw. zu durchfahren.

Weitere Vorteile und Einzelheiten der Erfindung sind der nachfolgenden Figurenbeschreibung mit Ausführungsbeispielen zu entnehmen. In den Figuren zeigt schematisch:

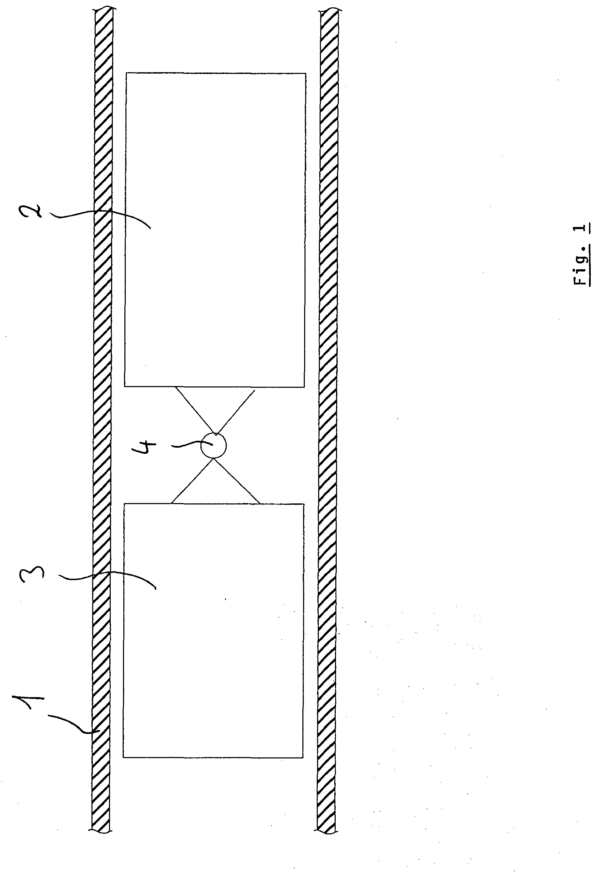

Fig. 1      eine Prinzipdarstellung eines erfindungsgemäßen Gegenstands,

Fig. 2      einen erfindungsgemäßen Gegenstand in einer Teilansicht,

Fig. 3      einen Teil des Gegenstands nach Fig. 2,

Fig. 4      einen Längsschnitt durch einen Teil eines weiteren erfindungsgemäßen Gegenstands,

Fig. 5      einen Querschnitt durch einen weiteren erfindungsgemäßen Gegenstand,

Fig. 6      einen Längsschnitt durch einen eines Teils eines weiteren erfindungsgemäßen Gegenstands,

Fig. 7      ein Diagramm für den Betrieb eines erfindungsgemäßen Gegenstands,

Fig. 8      ein Diagramm Abhängigkeit der Bremskraft der Wirbelstrombremseinheit eines erfindungsgemäßen Molches von dem Rohrdurchmesser,

Fig. 9 und 10      die Ausrichtung von Feld- und Wirbelstromlinien,

Fig. 11      ein Diagramm Kraft in Abhängigkeit der Geschwindigkeit.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

Ein erfindungsgemäßer Molch, der zum Durchfahren eines längsgestreckten, vorzugsweise im Querschnitt im Wesentlichen kreisförmigen Rohres 1 mit schraffierter Wand ausgebildet ist, weist im vorliegenden Fall eine Funktionseinheit 2 zum Aufnehmen von Rohrinformationen sowie eine Wirbelstrombremseinheit 3 auf. Die beiden Einheiten sind über ein Gelenk 4 gelenkig aneinander angebunden.

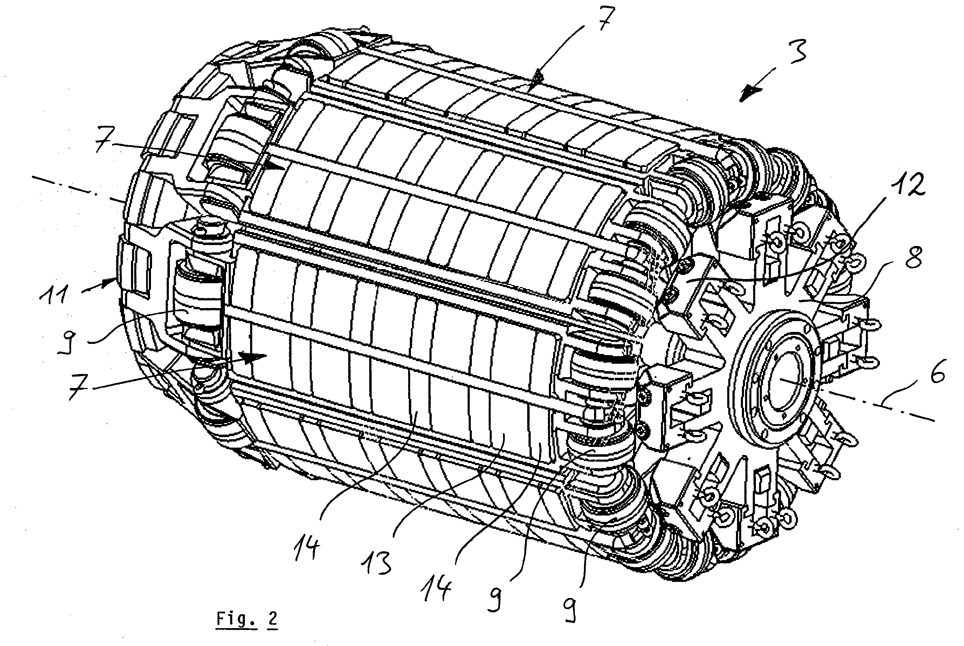

Die Wirbelstrombremseinheit 3 ist mit einer Mehrzahl von in Umfangsrichtung des Molches um eine Längsachse 6, die der Längsmittelachse entspricht, herum angeordneten Trägereinheiten 7 versehen. In Längsrichtung des Molches meint somit in eine Richtung parallel zur Längsmittelachse bzw. Längsachse 6. Die Wirbelstrombremseinheit nach Fig. 2 weist insgesamt acht Trägereinheiten auf, die zur Ausbildung von in Längsrichtung des Rohres hintereinander liegenden und in entgegengesetzte Richtungen fließende Wirbelströme ausgebildet ist. Die Trägereinheiten 7 sind in radialer Richtung beweglich an einem Trägerkörper 8 angeordnet, um Unebenheiten auf der Rohrinnenseite ausgleichen zu können. Einenends weist jede Trägereinheit zwei Abstandshalter 9 in Form von Rollen auf, während am entgegengesetzten Ende jeweils eine einzige Rolle angeordnet ist. An der Seite mit lediglich einem Abstandshalter 9 ist die Trägereinheit über ein Gelenk 11 gelenkig an dem Grundkörper der Wirbelstrombremseinheit angeordnet. Durch Lösen einer Abdeckung 12 kann eine Trägereinheit 7 ausgeklappt werden, um auf der zur Längsmittelachse hin liegenden Seite befindliche Stellmittel erreichbar zu gestalten. Über solche Stellmittel sind einzelne Magnete 13 bzw. zugehörige Verbindungselemente 14 weiter nach außen bzw. nach innen positionierbar, um den Abstand zur Rohrwand variieren zu können. Hierdurch ist die sich im Betrieb der Einheit ergebende Bremskraft auf einfache Weise für jeweilige Umgebungssituationen einstellbar. Die Trägereinheiten können in modularer Ausbildung auch bei Wirbelstrombremseinheiten für andere Rohrinnendurchmesser verwendet und entsprechend angepasst werden.

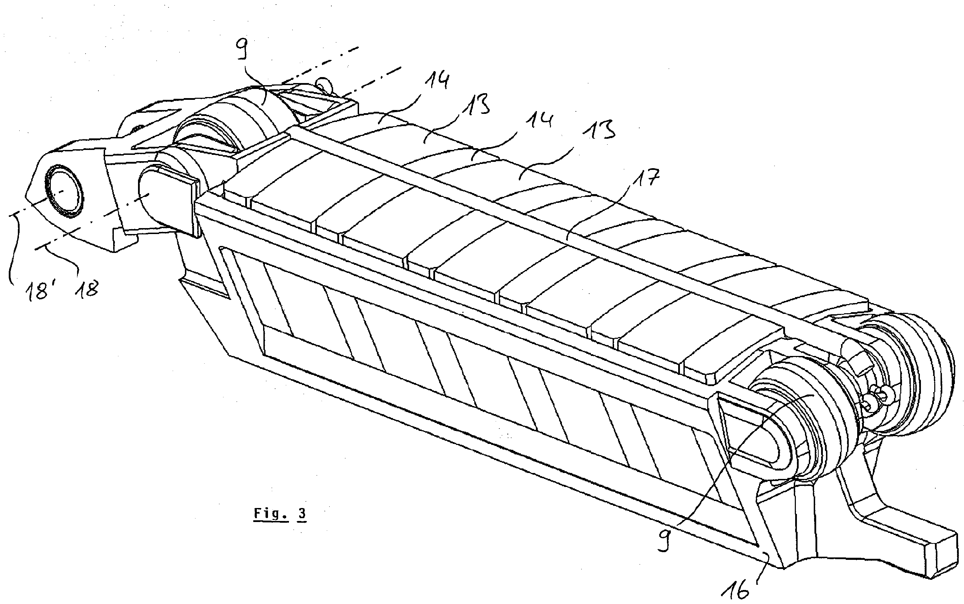

Einer einzelnen Trägereinheit ist in der Fig. 3 gezeigt. Die Trägereinheit weist einen Trägergrundkörper 16 auf, der eine im Wesentlichen U-förmige Form aufweist und zwischen dessen Schenkeln Verbindungselemente 14 bzw. Magnete 13 abwechselnd angeordnet sind. Die außenliegenden Verbindungselemente 14 sind nur mit einem Magneten 13 verbunden. Eine Stange 17 dient der Sicherung eines Minimalabstands zur Rohrwand und verhindert mit den jeweiligen Rädern ein Aufliegen der Verbindungselemente 14 auf der Rohrinnenwand. Der Trägerkörper 16 kann -muss jedoch nicht- je nach Ausführung der Trägereinheit um eine Achse 18 oder 18' verschwenkbar sein.

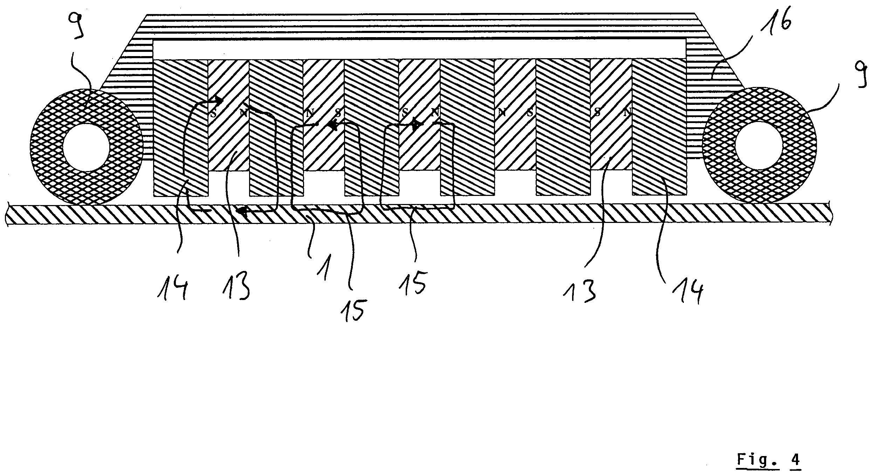

Der prinzipielle Längsschnitt durch eine Trägereinheit gemäß Fig. 4 zeigt den Trägerkörper 16, die Abstandshalter 9, die an dem Tragkörper 16 angeordnet sein können und die zwischen den Schenkeln des Tragkörpers befindlichen Befestigungselemente 14 inklusive der mit Polaritäten "S" und "N" eingezeichneten Magneten 13. Pfeile 15 zeigen exemplarisch die Ausrichtung der Magnetfeldlinien.

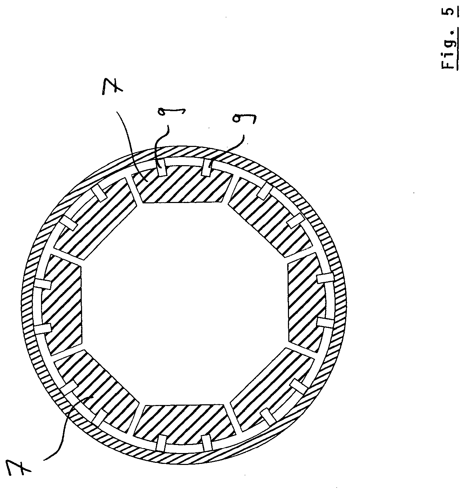

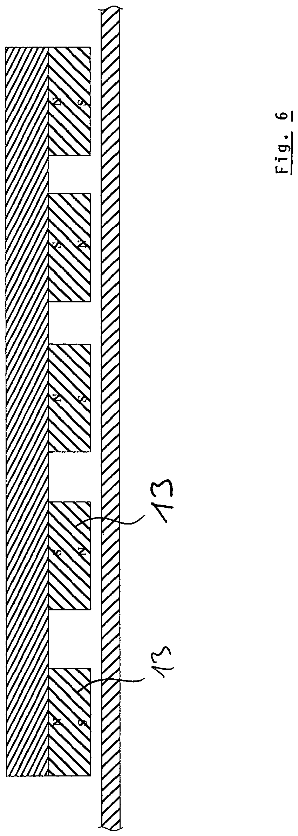

Eine prinzipielle Ansicht im Querschnitt ist in der Fig. 5 gezeigt. Die nach innen hin konisch zulaufenden Trägereinheiten sind vollständig entlang des Umfangs um die Längsachse des Molchs herum angeordnet. Hierdurch können in Umfangsrichtung des Molches um diesen herum verlaufende Wirbelströme in der Rohrleitungswand erzeugt werden. Vorzugsweise wird ein Aufbau der Magnete wie in den Fig. 6 bzw. 4 verwendet. Während der Aufbau der Fig. 4 bevorzugt ist, da dort die Flusslinien von den Verbindungselementen gebündelt und umgelenkt senkrecht in die Rohrwand eingeleitet werden, ist aufgrund der in Fig. 6 senkrecht zur Rohrwand ausgerichteten Magnete 13 keine Bündelung zur Rohrwand hin gegeben. Die Magnete 13 sind über ein Verbindungselement 14 verbunden, welches jedoch nicht auf Seite der nächstliegenden Rohrwand ist. Vielmehr werden über dieselbe Länge der Wirbelstrombremseinheit weniger Magnete verwendet. Dies führt zu einer geringeren Flussdichte und somit zu einem schlechteren Wirkungsgrad der Wirbelstrombremseinheit eines erfindungsgemäßen Molches.

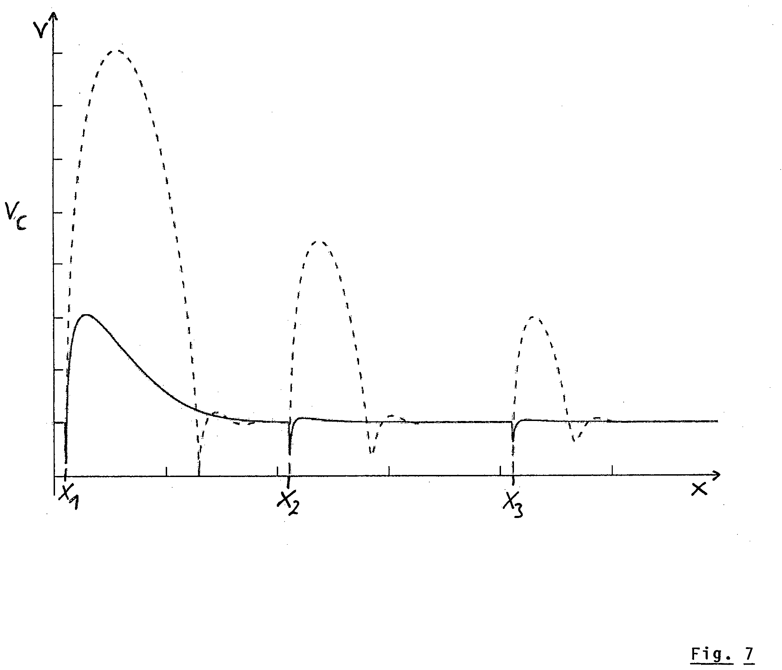

Fig. 7 zeigt Simulationsergebnisse einer Geschwindigkeitsentwicklung eines Molches mit einer erfindungsgemäßen Bremseinheit (durchgezogene Linie) sowie ohne eine solche Bremseinheit (gestrichelte Linie) in einem gasführenden Rohr. An den Stellen $x_1$, $x_2$ und $x_3$ sind Hindernisse mit in Richtung x abnehmendem Bremswiderstand angeordnet. Hierbei handelt es sich beispielsweise um drei umlaufende Schweißnähte, die eine erhöhte Reibung für durchfahrende Molche bewirken. $v_C$ ist eine kritische Geschwindigkeit, ab der Messungenauigkeiten zu groß werden.

Erfindungsgemäß kann der Molch so ausgelegt werden, dass die durch die Wirbelstrombremseinheit ausgeübten Wirbelstrombremskräfte von dem mit dem Strom des Mediums laufenden Molch größer sind als die durch mögliche Hindernisse erzeugten Reibungskraftzuwächse. Durch das Abbremsen des Molches an dem ersten Hindernis an der Stelle $x_1$ staut sich hinter dem Molch das Gas, was zu einem erhöhten Gasdruck führt. In dem Moment, in dem die Reibungskraft überwunden werden kann, beschleunigt der ohne eine Wirbelstrombremseinheit ausgestattete Molch stark und überschreitet die kritische Geschwindigkeit $v_C$. Beim Beschleunigen des mit einer erfindungsgemäßen Wirbelstrombremseinheit ausgestatteten Molches erfolgt ein Anstieg der Bremskraft durch die Wirbelstrombremseinheit, die mit der Steigung der Geschwindigkeit einhergeht. Dies bremst den Molch ab, so dass er im Vergleich zu einem herkömmlichen Molch schnell seine Betriebsgeschwindigkeit erreichen kann. Durch das Überschwingen des ohne Wirbelstrombremseinheit ausgestatteten Molches hingegen werden weitere Messungenauigkeiten bewirkt. Auch an den Stellen $x_2$ und $x_3$, die Orte erhöhter Reibung für den Molch darstellen, ändert sich die Geschwindigkeit des herkömmlichen Molches stark und nahezu bis in den kritischen Bereich hinein, was wiederum zu Datenungenauigkeiten führt. Der mit einer erfindungsgemäßen Wirbelstrombremseinheit versehene Molch hingegen kann im Wesentlichen unbeeinflusst weiterfahren.

Die gleichmäßige Fahrt des Molches wird insbesondere dadurch erreicht, dass die geschwindigkeitsabhängige Bremskraft von dem mit dem Mediums laufenden Molch größer ist als die mögliche Erhöhung von von Reibungskräften aufgrund von z.B. Schweißnähten oder Beulen im Rohr. Durch den Abbau der wirbelstrombasierten Bremskräfte aufgrund der Verringerung der Geschwindigkeit werden die von den Rohrverengungen bzw. -querschnittsverjüngungen bewirkten oder bei Bogendurchfahrten entstehenden Reibungskraftzuwächse kompensiert. Der Molch fährt ohne stecken zu bleiben weiter. Durch die gleichmäßigere Fahrt des erfindungsgemäßen Molches sind eine Reinigungswirkung und/oder die Datenqualität gegenüber dem Stand der Technik deutlich verbessert.

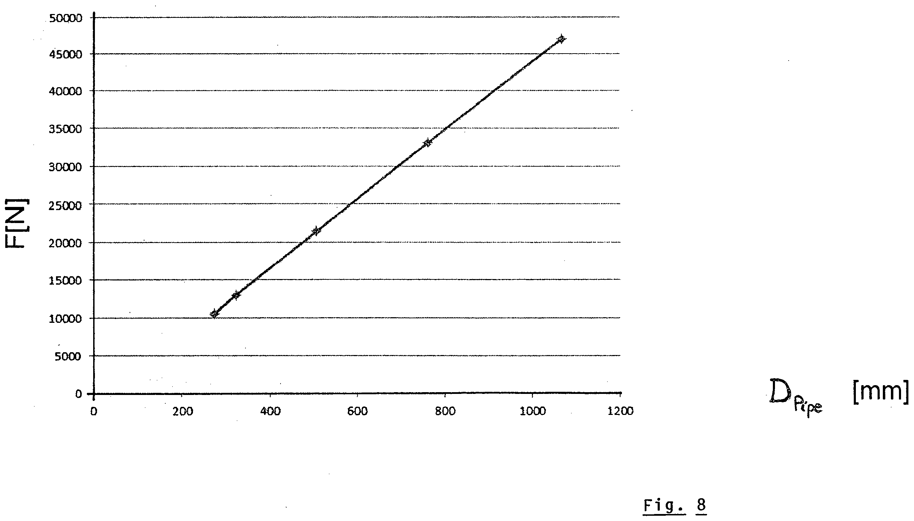

Fig. 8 zeigt exemplarisch für eine Rohrwanddicke von 7 mm die Auslegung der Wirbelstrombremseinheiten in Abhängigkeit des Rohrdurchmessers. Die fünf verschiedenen Punkte bei den jeweiligen Durchmessern zeigen einen approximierten linearen Zusammenhang zwischen den Wirbelstrombremseinheiten und dem Rohrleitungsdurchmesser ("$D_{Pipe}$ [mm]") für einen oft verwendeten Stahl ST 37 bei einer Geschwindigkeit des Molches von 2 m/s ($F_{Brake}$ = 43314N/m * $D_{pipe}$).

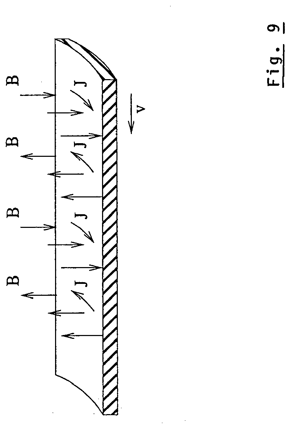

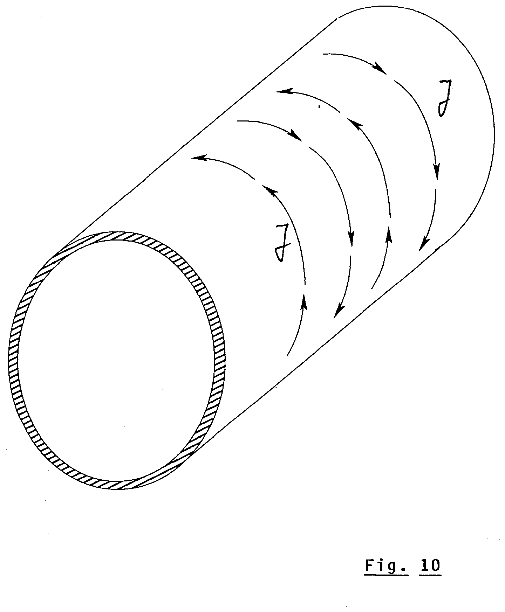

In den Fig. 9 und 10 sind die in Umfangsrichtung erzeugten Wirbelströme J, die in Längsrichtung des Rohres bzw. auch in Geschwindigkeitsrichtung v betrachtet entgegengesetzt verlaufen, gezeigt. Durch die erfindungsgemäße Ausbildung eines Molches verlaufen die erzeugten Wirbelströme J in Umfangsrichtung und vorzugsweise vollständig um das Rohr (vgl. Fig. 10). Die erzeugten Magnetfelder sind hierbei wie vorbeschrieben in Richtung senkrecht zur Oberfläche des Rohres ebenfalls alternierend, d.h., mit entgegengesetzten Richtungen weisenden Feldlinien versehen und im Wesentlichen radial zur Längsachse hin ausgebildet.

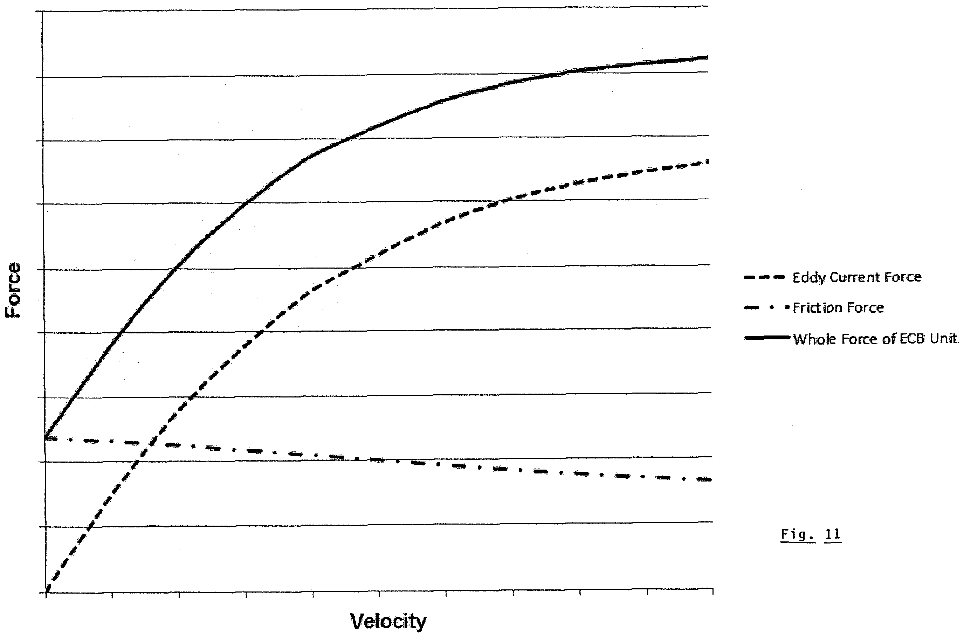

Die Bremskraft ("Force") eines erfindungsgemäßen Molches ist (einheitenlos) in Fig. 11 als Funktion der Geschwindigkeit ("Velocity") des Molches gezeigt. Gestrichelt dargestellt ist die Bremskraft der Wirbelstrombremseinheit ("Eddy Current Force"), die bei einer Geschwindigkeit von v = 0m/s bei Null liegt. Die allein durch mechanische Reibung ausgeübte Bremskraft ("Friction Force") nimmt mit steigender Geschwindigkeit etwas ab und ist strichliniert dargestellt. In der Regel ist die Änderung der mechanischen Reibung über Geschwindigkeit viel kleiner als das Wachstum der Wirbelstromkraft und kann in erster Näherung vernachlässigt werden. Liniert dargestellt ist die Summe der sich ergebenden Bremskraft ("Whole Force of ECB unit"). Damit ein erfindungsgemäßer Molch mit der Wirbelstrombremseinheit ein Hindernis ohne anzuhalten passieren kann, muss die Reibungserhöhung des Molches (umfassend die Bremseinheit und aufgrund des Hindernisses) kleiner sein als die Bremskraft bei Molchgeschwindigkeit abzüglich der Bremskraft bei Geschwindigkeit Null.

## Patentansprüche

1.    Molch zum Durchfahren eines langgestreckten Rohres (1) mit einer Rohrwand, vorzugsweise einer Gaspipeline, umfassend zumindest eine Funktionseinheit (2) zum Reinigen des Rohres (1) und/oder zum Aufnehmen von Rohrinformationen sowie umfassend eine Bremse zur Geschwindigkeitskontrolle, **dadurch gekennzeichnet, dass** der Molch eine durch eine Mehrzahl von Magneten (13) mit ausgebildete Wirbelstrombremseinheit (3) aufweist, die dazu ausgebildet ist, durch Wechselwirkung der Magnete (13) mit in der Wand des Rohres (1) aufgrund von Wirbelstrom induzierten Magnetfeldern eine geschwindigkeitsabhängige Bremskraft zu erzeugen, so dass der Molch keine zur Reinigung oder zur Messdatenaufnahme nicht akzeptable Geschwindigkeit erreicht.

2. Molch nach Anspruch 1, **dadurch gekennzeichnet, dass** die Magnete (13) in Längsrichtung der Wirbelstrombremseinheit (3) mit alternierenden Polaritäten hintereinander angeordnet sind.

3. Molch nach Anspruch 2, **dadurch gekennzeichnet, dass** zumindest drei Magnete (13) hintereinander angeordnet sind.

4. Molch nach einem der vorherigen Ansprüche, **dadurch gekennzeichnet, dass** die Erstreckung der Magnete (13) von Pol zu Pol kleiner ist als die Erstreckung der Magnete (13) quer dazu.

5. Molch nach einem der vorherigen Ansprüche, **dadurch gekennzeichnet, dass** die Magnete (13) dergestalt angeordnet sind, dass in der Wand des Rohres (1) in Umfangsrichtung um den Molch herumlaufende Wirbelströme (7) erzeugt werden können.

6. Molch nach Anspruch 5, **dadurch gekennzeichnet, dass** im Betrieb des Molches eine Mehrzahl von in abwechselnd entgegengesetzte Richtungen fließende Wirbelströme erzeugt werden.

7. Molch nach einem der vorherigen Ansprüche, **dadurch gekennzeichnet, dass** den Magneten (13) zumindest ein magnetisch permeables Verbindungselement (14) zugeordnet ist, welches vorzugsweise wenigstens zwei Magnete (13) miteinander verbindet.

8. Molch nach Anspruch 7, **dadurch gekennzeichnet, dass** das Verbindungselement (14) dergestalt zur Wand des Rohres (1) ausgerichtet ist, dass der Magnetfluß im Wesentlichen senkrecht in die Wand des Rohres hineinführt.

9. Molch nach einem der vorherigen Ansprüche, **dadurch gekennzeichnet, dass** mehrere Magnete (13) auf einer Trägereinheit (7) angeordnet sind.

10. Molch nach Anspruch 9, **dadurch gekennzeichnet, dass** in Umfangsrichtung des Molches mehrere Trägereinheiten (7) nebeneinander angeordnet sind.

11. Molch nach einem der vorherigen Ansprüche, **gekennzeichnet durch** wenigstens einen Abstandshalter (9), über den die Magneten (13) von der Wand des Rohres (1) beabstandet positionierbar sind.

12. Molch nach Anspruch 11, **dadurch gekennzeichnet, dass** der Abstandshalter (9) projiziert auf eine Ebene senkrecht zur Längsachse (6) des Molches relativ zu den Magneten (13) positionierbar ist.

13. Molch nach einem der vorherigen Ansprüche, **dadurch gekennzeichnet, dass** die Wirbelstrombremseinheit (3) als eine eigene Baugruppe des Molches insbesondere über ein Gelenk (4) mit der Funktionseinheit (2) verbunden ausgebildet ist.

14. Molch nach einem der vorherigen Ansprüche, **dadurch gekennzeichnet, dass** die Wirbelstrombremseinheit (3) Sensoren zur Aufnahme von Daten des Rohres (1) aufweist.

15. Molch nach einem der vorherigen Ansprüche, **dadurch gekennzeichnet, dass** die Wirbelstrombremseinheit (3) derart ausgeführt ist, dass bei einer Geschwindigkeit von 2 m/s im Rohr eine Bremskraft $F_{Brake}$ in Abhängigkeit des Rohrdurchmessers von mindestens

$$F_{Brake}= m * D_{Pipe},$$

wobei $D_{Pipe}$ = Durchmesser des Rohres [m], m = 7000 N/n

erreicht wird.

## Claims

1. Pig for passing through an elongate pipe (1) having a pipe wall, preferably a gas pipeline, comprising at least one functional unit (2) for cleaning the pipe (1) and/or for recording pipe information and comprising a brake for controlling speed, **characterised in that** the pig has an eddy current braking unit (3) formed amongst other things by a plurality of magnets (13) which, based on the interaction of the magnets (13) with magnetic fields induced in the wall of the pipe (1) as a result of eddy current, is configured to generate a speed-dependent braking force so that the pig does not reach a speed that is unacceptable for cleaning or for recording measurement data.

2. Pig as claimed in claim 1, **characterised in that** the magnets (13) are disposed one after the other with alternating polarities in the longitudinal direction of the eddy current braking unit (3).

**3.** Pig as claimed in claim 2, **characterised in that** at least three magnets (13) are disposed one after the other.

**4.** Pig as claimed in one of the preceding claims, **characterised in that** the extension of the magnets (13) from pole to pole is shorter than the extension of the magnets (13) transversely thereto.

**5.** Pig as claimed in one of the preceding claims, **characterised in that** the magnets (13) are disposed in such a way that eddy currents (7) can be generated in the wall of the pipe (1) running around the pig in the circumferential direction.

**6.** Pig as claimed in claim 5, **characterised in that** during operation of the pig, a plurality of eddy currents are generated flowing alternately in opposite directions.

**7.** Pig as claimed in one of the preceding claims, **characterised in that** at least one magnetically permeable connecting element (14) is assigned to the magnets (13) which preferably connects at least two magnets (13) to one another.

**8.** Pig as claimed in claim 7, **characterised in that** the connecting element (14) is oriented in such a way relative to the wall of the pipe (1) that the magnetic flux enters the wall of the pipe substantially perpendicularly.

**9.** Pig as claimed in one of the preceding claims, **characterised in that** multiple magnets (13) are disposed on a carrier unit (7).

**10.** Pig as claimed in claim 9, **characterised in that** multiple carrier units (7) are disposed next to one another in the circumferential direction of the pig.

**11.** Pig as claimed in one of the preceding claims, **characterised by** at least one spacer (9) by means of which the magnets (13) can be positioned at a distance from the wall of the pipe (1).

**12.** Pig as claimed in claim 11, **characterised in that** when projected onto a plane perpendicular to the longitudinal axis (6) of the pig, the spacer (9) can be positioned relative to the magnets (13).

**13.** Pig as claimed in one of the preceding claims, **characterised in that** the eddy current braking unit (3) is provided in the form of a separate module of the pig, in particular connected to the functional unit (2) by means of a joint (4).

**14.** Pig as claimed in one of the preceding claims, **characterised in that** the eddy current braking unit (3) has sensors for recording data of the pipe (1).

**15.** Pig as claimed in one of the preceding claims, **characterised in that** the eddy current braking unit (3) is configured so that at a speed of 2 m/s in the pipe, a braking force $F_{Brake}$, depending on the pipe diameter, of at least

$$F_{Brake} = m \star D_{Pipe}$$

is reached, where

$D_{Pipe}$ = diameter of the pipe [m],
m = 7000 N/n.

## Revendications

**1.** Racleur destiné à se déplacer à travers un tube allongé (1) comprenant une paroi de tube, de préférence un pipeline gazier, comprenant au moins une unité fonctionnelle (2) destinée à nettoyer le tube (1) et/ou à enregistrer des informations de tube et comprenant un frein pour le contrôle de vitesse, **caractérisé en ce que** le racleur présente une unité de frein à courants de Foucault (3) réalisée par une pluralité d'aimants (13) et réalisée pour produire, par l'interaction des aimants (13) avec des champs magnétiques induits dans la paroi du tube (1) suite à des champs magnétiques induits par le courant de Foucault, une force de freinage en fonction de la vitesse de sorte que le racleur n'atteigne pas une vitesse non-acceptable pour le nettoyage ou pour l'enregistrement de données de mesure.

**2.** Racleur selon la revendication 1, **caractérisé en ce que** les aimants (13) sont disposés les uns derrière les autres avec des polarités alternantes dans la direction longitudinale de l'unité de frein à courants de Foucault (3).

**3.** Racleur selon la revendication 2, **caractérisé en ce qu'**au moins trois aimants (13) sont disposés les uns derrière les autres,

**4.** Racleur selon une des revendications précédentes, **caractérisé en ce que** l'extension des aimants (13) d'un pôle à un autre est inférieure à l'extension des aimants (13) transversalement à ceux-ci.

**5.** Racleur selon une des revendications précédentes, **caractérisé en ce que** les aimants (13) sont disposés de telle sorte que, dans la paroi du tube (1), des courants de Foucault (7) peuvent être générés dans la direction circonférentielle en circulant autour du racleur.

**6.** Racleur selon la revendication 5, **caractérisé en ce que**, dans le fonctionnement du racleur, une pluralité de courants de Foucault circulant dans des directions tour à tour opposées sont générés.

**7.** Racleur selon une des revendications précédentes, **caractérisé en ce qu'**au moins un élément de liaison perméable magnétique (14) est associé aux aimants (13) et relie de préférence au moins deux aimants (13) l'un à l'autre.

**8.** Racleur selon la revendication 7, **caractérisé en ce que** l'élément de liaison (14) est orienté par rapport à la paroi du tube (1) de telle sorte que le flux magnétique est dirigé sensiblement perpendiculairement dans la paroi du tube.

**9.** Racleur selon une des revendications précédentes, **caractérisé en ce que** plusieurs aimants (13) sont disposés sur une unité de support (7).

**10.** Racleur selon la revendication 9, **caractérisé en ce que**, dans la direction circonférentielle du racleur, plusieurs unités de support (7) sont disposées les unes à côté des autres.

**11.** Racleur selon une des revendications précédentes, **caractérisé par** au moins une pièce d'écartement (9), qui permet de positionner les aimants (13) à distance de la paroi du tube (1).

**12.** Racleur selon la revendication 11, **caractérisé en ce que** la pièce d'écartement (9) peut être positionnée de manière projetée sur un plan perpendiculairement à l'axe longitudinal (6) du racleur par rapport aux aimants (13).

**13.** Racleur selon une des revendications précédentes, **caractérisé en ce que** l'unité de frein à courants de Foucault (3) est réalisée reliée à l'unité fonctionnelle (2) par le biais d'un module propre du racleur, en particulier par le biais d'une articulation (4).

**14.** Racleur selon une des revendications précédentes, **caractérisé en ce que** l'unité de frein à courants de Foucault (3) présente des capteurs pour enregistrer des données du tube (1).

**15.** Racleur selon une des revendications précédentes, **caractérisé en ce que** l'unité de frein à courants de Foucault (3) est réalisée de telle sorte que, à une vitesse de 2 m/s dans le tube, une force de freinage $F_{Brake}$ est atteinte en fonction du diamètre de tube d'au moins

$$F_{Brake} = m \cdot D_{Pipe},$$

où

$D_{Pipe}$ = diamètre du tube [m],
m = 7000 N/m.

Fig. 1

Fig. 2

EP 3 019 285 B1

Fig. 3

Fig. 4

EP 3 019 285 B1

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1828764 B1
- WO 03078887 A1